(19) Europäisches Patentamt
European Patent Office
Office européen des brevets

(11) EP 2 413 653 A1

(12) EUROPEAN PATENT APPLICATION
published in accordance with Art. 153(4) EPC

(43) Date of publication:
01.02.2012 Bulletin 2012/05

(51) Int Cl.:
H04W 72/04 (2009.01)     H04J 1/00 (2006.01)
H04J 3/00 (2006.01)     H04W 72/12 (2009.01)

(21) Application number: 10756080.7

(22) Date of filing: 24.03.2010

(86) International application number:
PCT/JP2010/055019

(87) International publication number:
WO 2010/110284 (30.09.2010 Gazette 2010/39)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 25.03.2009 JP 2009075220

(71) Applicant: NTT DOCOMO, INC.
Chiyoda-ku
Tokyo 100-6150 (JP)

(72) Inventors:
• KIYOSHIMA, Kohei
  Tokyo 100-6150 (JP)
• ISHII, Hiroyuki
  Tokyo 100-6150 (JP)
• OKUBO, Naoto
  Tokyo 100-6150 (JP)

(74) Representative: HOFFMANN EITLE
Patent- und Rechtsanwälte
Arabellastraße 4
81925 München (DE)

(54) **RADIO BASE STATION AND MOBILE COMMUNICATION METHOD**

(57) A radio base station according to the present invention comprising: a radio base station comprising: a resource assignment unit configured to determine a time direction resource, a frequency direction resource, and a code direction resource which are to be assigned as a scheduling request transmission resource for transmitting a scheduling request that requests scheduling for uplink data communication to each mobile station, the resource assignment unit is configured to determine the time direction resource and the frequency direction resource, which are to be assigned as the scheduling request transmission resource, and then determine the code direction resource to be assigned as the scheduling request transmission resource.

FIG. 13

EP 2 413 653 A1

**Description**

**TECHNICAL FIELD**

The present invention relates to a radio base station and a mobile communication method.

**BACKGROUND ART**

In a mobile communication system of an LTE (Long Term Evolution) scheme defined in the 3GPP, each mobile station UE is configured to transmit a scheduling request (hereinafter, referred to as "SR") that requests scheduling for uplink data communication to a radio base station eNB via PUCCH (Physical Uplink Control Channel).

**SUMMARY OF THE INVENTION**

**PROBLEMS TO BE SOLVED BY THE INVENTION**

However, since a method for assigning an SR transmission resource to each mobile station UE has not been defined in the 3GPP, there is a problem that the SR transmission resource may not be appropriately assigned in the above-mentioned mobile communication system.

Therefore, the present invention is intended to overcome the above-described problem. An object of the present invention is to provide a radio base station capable of appropriately assigning an SR transmission resource, and a mobile communication method therefor.

**MEANS FOR SOLVING THE PROBLEM**

The first feature of the present invention is summarized in that a radio base station comprising: a resource assignment unit configured to determine a time direction resource, a frequency direction resource, and a code direction resource which are to be assigned as a scheduling request transmission resource for transmitting a scheduling request that requests scheduling for uplink data communication to each mobile station, the resource assignment unit is configured to determine the time direction resource and the frequency direction resource, which are to be assigned as the scheduling request transmission resource, and then determine the code direction resource to be assigned as the scheduling request transmission resource.

The second feature of the present invention is summarized in that a mobile communication method, comprising: a step A of determining a time direction resource, a frequency direction resource, and a code direction resource which are to be assigned as a scheduling request transmission resource for transmitting a scheduling request that requests scheduling for uplink data communication to each mobile station; and a step B of notifying each mobile station of the time direction resource, the frequency direction resource, and the code direction resource which have been assigned as the scheduling request transmission resource, in the step A, the time direction resource and the frequency direction resource to be assigned as the scheduling request transmission resource are determined, and then the code direction resource to be assigned as the scheduling request transmission resource is determined.

**EFFECT OF THE INVENTION**

As described above, according to the present invention, it is possible to provide a radio base station capable appropriately assigning an SR transmission resource, and a mobile communication method therefor.

**BRIEF DESCRIPTION OF THE DRAWINGS**

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram explaining an example of an SR transmission sub-frame assigned by a radio base station according to the first embodiment of the present invention.
[Fig. 4] Fig. 4 is a diagram explaining a method in which the radio base station according to the first embodiment of the present invention assigns a PUCCH resource.

[Fig. 5] Fig. 5 is a diagram explaining a resource block within a PUCCH resource assigned by the radio base station according to the first embodiment of the present invention.

[Fig. 6] Fig. 6 is a diagram explaining a method in which a resource block within a PUCCH resource is assigned by the radio base station according to the first embodiment of the present invention is assigned in order to transmit CQI, A/N, and SR.

[Fig. 7] Fig. 7 is a diagram explaining a resource block assigned for transmitting A/N and SR of resource blocks within a PUCCH resource, by the radio base station according to the first embodiment of the present invention.

[Fig. 8] Fig. 8 is a diagram explaining a resource block assigned for transmitting CQI, A/N, and SR in a mixed manner, of resource blocks within a PUCCH resource, by the radio base station according to the first embodiment of the present invention.

[Fig. 9] Fig. 9 is a diagram explaining an example of a code direction resource within a PUCCH resource assigned by the radio base station according to the first embodiment of the present invention.

[Fig. 10] Fig. 10 is a diagram explaining a method in which an SR transmission resource is assigned by the radio base station according to the first embodiment of the present invention.

[Fig. 11] Fig. 11 is a diagram explaining a method in which an SR transmission resource is assigned by the radio base station according to the first embodiment of the present invention.

[Fig. 12] Fig. 12 is a diagram explaining a method in which an SR transmission resource is assigned by the radio base station according to the first embodiment of the present invention.

[Fig. 13] Fig. 13 is a flowchart illustrating a method in which an SR transmission resource is assigned by the radio base station according to the first embodiment of the present invention.

## BEST MODES FOR CARRYING OUT THE INVENTION

(Configuration of mobile communication system according to first embodiment of the present invention)

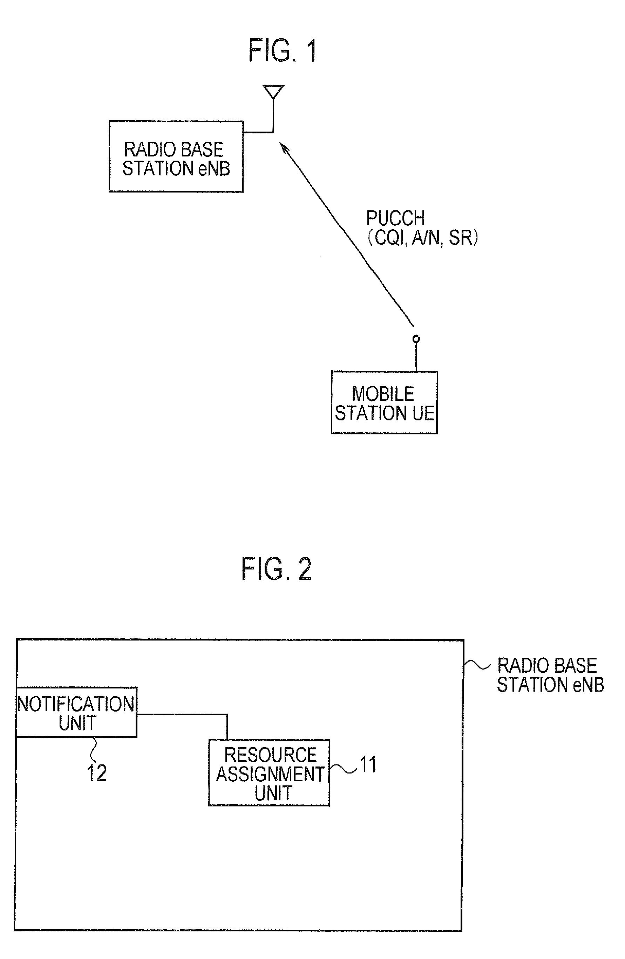

With reference to Fig. 1 to Fig. 12, the configuration of a mobile communication system according to a first embodiment of the present invention will be explained.

The mobile communication system according to the present embodiment is a mobile communication system of an LTE scheme. In the mobile communication system according to the present embodiment, as illustrated in Fig. 1, a mobile station UE is configured to transmit CQI (Channel Quality Indicator) indicating a reception quality that must be used for notifying a reception quality in a downlink, ACK/NACK (hereinafter, referred to as "A/N") for downlink data, SR, etc., to a radio base station eNB via PUCCH.

As illustrated in Fig. 2, the radio base station eNB includes a resource assignment unit 11 and a notification unit 12.

The resource assignment unit 11 is configured to assign a predetermined physical channel resource in each cell subordinate to the radio base station eNB.

For example, the resource assignment unit 11 is configured to assign a PUCCH resource, a PUSCH (Physical Uplink Shared Channel) resource and the like as an uplink physical channel resource in each cell subordinate to the radio base station eNB.

Further, the resource assignment unit 11 is configured to assign a PDCCH (Physical Downlink Control Channel) resource, a PDSCH (Physical Downlink Shared Channel) resource and the like as a downlink physical channel resource in each cell subordinate to the radio base station eNB.

Here, the resource assignment unit 11 is configured to assign a CQI, transmission resource, an A/N transmission resource, or an SR transmission resource among the PUCCH resources.

A specific example of the operation in which the resource assignment unit 11 assigns the resource will be explained later.

The notification unit 12 is configured to notify the resource assigned by the resource assignment unit 11 in each cell subordinate to the radio base station eNB.

Specifically, the notification unit 12 is configured to notify each mobile station UE of the CQI transmission resource, the A/N transmission resource, or the SR transmission resource by way of an RRC message.

The specific example of the operation in which the resource assignment unit 11 assigns the resource will be explained, below.

Specifically, the resource assignment unit 11 is configured to determine a time direction resource, a frequency direction resource, and a code direction resource which are to be assigned to each mobile station UE as the SR transmission resource.

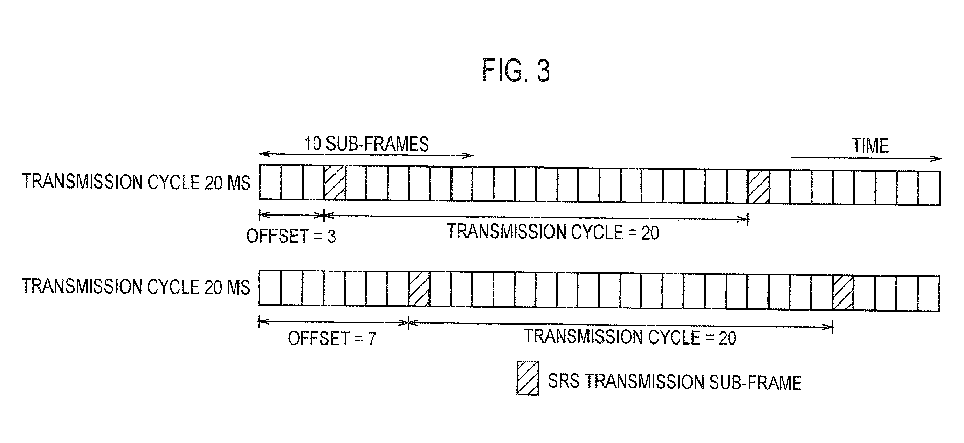

As illustrated in Fig. 3, the resource assignment unit 1 may be configured to determine a sub-frame for transmitting the SR as time direction resource assigned to each mobile station UE as the SR transmission resource.

For example, as illustrated in Fig. 3, the sub-frame for transmitting the SR is determined by offset from the transmission cycle of the SR and the head of a radio frame.

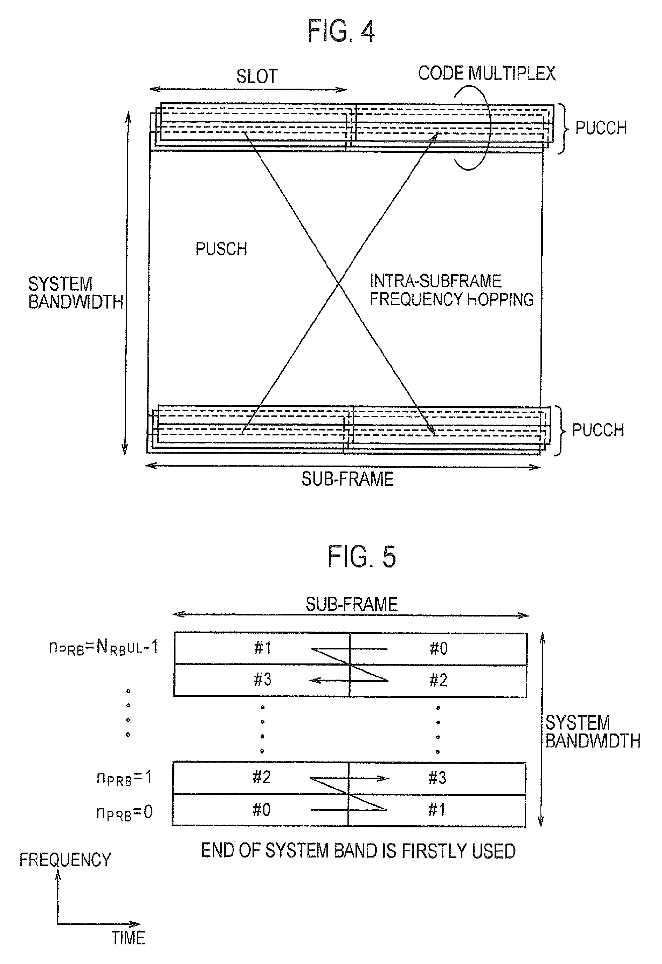

As illustrated in Figs. 4 and 5, the resource assignment unit 11 is configured to assign in order from resource blocks at the both ends of a system bandwidth, the resource assignment unit 11 is configured to assign a resource block as a PUCCH resource block, and to assign a resource block inside a resource block assigned as a PUCCH resource block, as a PUSCH resource block.

Here, each resource block (hereinafter, referred to as "RB") is configured by 7 OFDM symbols and 12 sub-carriers.

It is noted that, as illustrated in Fig. 4, it is configured that in each PUCCH RB, code multiplexing is performed. Thus, the resource assignment unit 11 is configured to assign the time direction resource, the frequency direction resource, and the code direction resource as the PUCCH resource.

Further, the resource assignment unit 11 is configured to assign the PUCCH resource between a first half portion (slot) within a single sub-frame and a second half (slot) thereof, by way of "Intra-subframe frequency hopping" as illustrated in Fig. 4.

As illustrated in Fig. 5, the resource assignment unit 11 is configured to assign two RBs to which the same RB number is imparted as the same PUCCH RB.

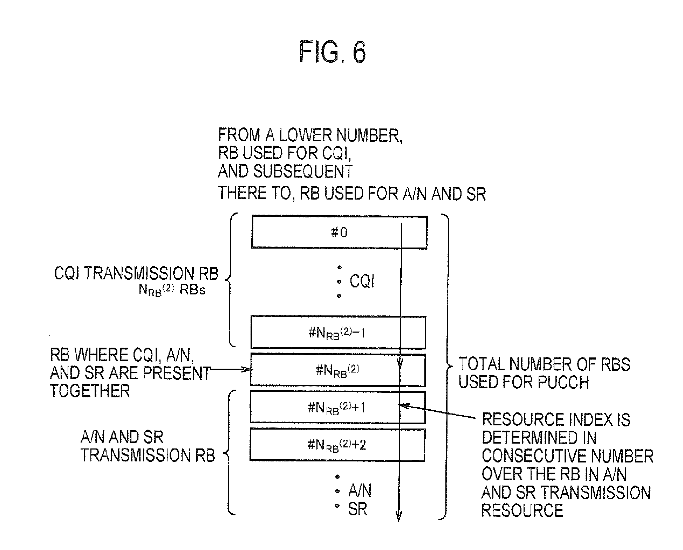

As illustrated in Fig. 6, the resource assignment unit 11 is configured to assign, as the CQI transmission RBs, in order from RB to which a lower RB number is imparted, from among the RBs assigned as the PUCCH RBs, and then to assign remaining RBs as the A/N transmission RBs and the SR transmission RBs.

It is noted that, as illustrated in Fig. 6, the PUCCH RBs may include "RBs where the CQI, the A/N, and the SR are present together", which are the CQI transmission RBs, the A/N transmission RBs, and the SR transmission RBs.

The resource assignment unit 11 is configured to determine RB (frequency direction resource) to be assigned to each mobile station UE as the SR transmission resource, from the RBs assigned as the PUCCH RBs.

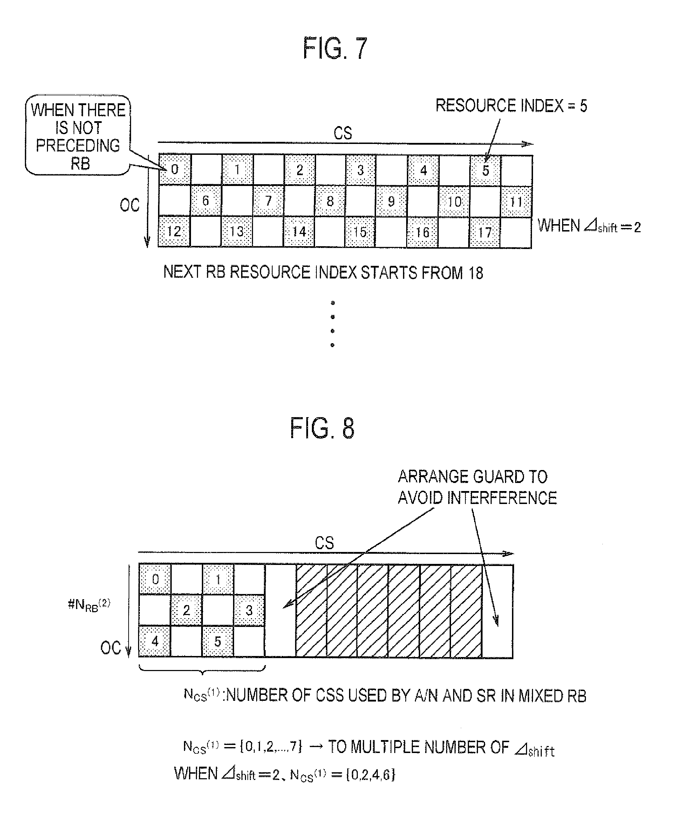

Further, as illustrated in Fig. 7, a code direction resource assignable as the A/N transmission resource and the SR transmission resource is multiplexed by a combination (hereinafter, referred to as "CS/OC") of a plurality of (e.g., three) OCs (Orthogonal Codes) and a plurality of (e.g., 12) cyclic sequences (hereinafter, referred to as "CS"s) which have a "Cyclic Shift" relation to each other while being orthogonal to each other in each RB.

As illustrated in Fig. 7, a resource index is imparted to the code direction resource (CS/OC) assignable as the A/N transmission resource and the SR transmission resource within a single sub-frame. The resource index is configured to be continuously imparted over a plurality of RBs within a single sub-frame.

That is, the resource assignment unit 11 is configured to determine a resource index for specifying a resource (combinations of RBs and CS/OCs) in each sub-frame assigned as the SR transmission resource, the notification unit 12 is configured to notify each mobile station UE of the determined resource index, and each mobile station UE is configured to transmit the SR using the SR transmission resource (within the PUCCH resource) specified by the notified resource index.

Further, in RB #$N_{RB}^{(2)}$ where CQI, A/N and SR are present together, as illustrated in Fig. 8, there exist a code direction resource (CS/OC) assignable as a CQI transmission resource and a code direction resource (CS/OC) assignable as an A/N transmission resource and an SR transmission resource.

Here, $N_{CS}^{(1)}$ denotes the number of the CSs assignable as the A/N transmission resource and the SR transmission resource in the RBs where the CQI, the A/N and the SR are present together, and is a multiple of $\Delta_{shift}$. The $\Delta_{shift}$ denotes the amount of "Cyclic Shift" used when calculating the CS.

In the example of Fig. 8, as the A/N transmission resource and the SR transmission resource, four code direction resources (CSs) can be multiplexed in one frequency direction resource (RB) and three orthogonal codes (OCs) can be multiplexed in one code direction resource (CS).

It is noted that, in order to avoid interference, a code direction resource (CS) for guard is provided between the code direction resource (CS) assignable as the CQI transmission resource and the code direction resource (CS) assignable as the A/N transmission resource and the SR transmission resource. Further, the code direction resource (CS) for guard may be provided between the code direction resources (CSs) assignable as the CQI transmission resource.

The resource index imparted to the code direction resource (CS) assignable as the CQI transmission resource and the resource index imparted to the code direction resource (CS/OC) assignable as the A/N transmission resource and the SR transmission resource are separated from each other.

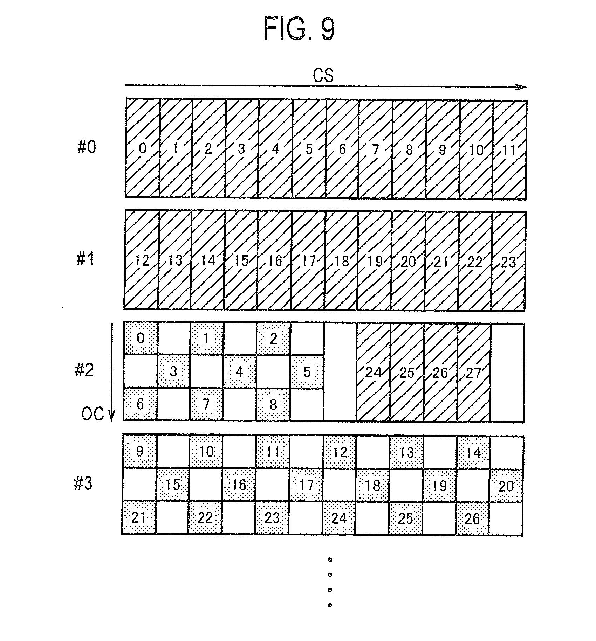

Fig. 9 illustrates an example of the resource index imparted to the code direction resource (CS) assignable as the CQI transmission resource and the resource index imparted to the code direction resource (CS/OC) assignable as the A/N transmission resource and the SR transmission resource in the RBs where the CQI, the A/N, and the SR are present together.

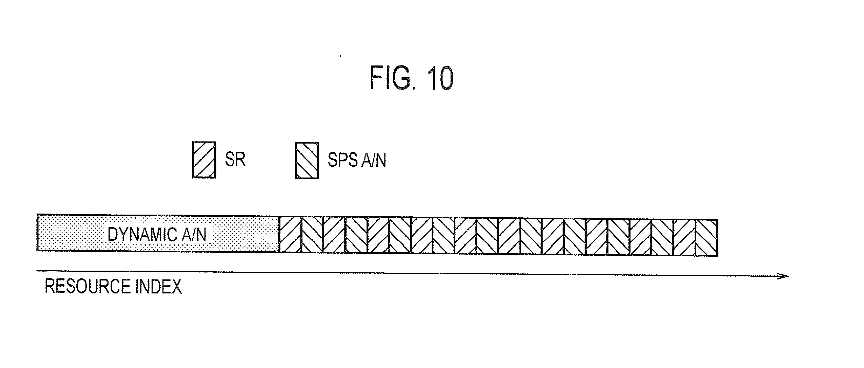

Further, as illustrated in Fig. 10, the code direction resource (CS/OC) assignable as the A/N transmission resource and the SR transmission resource is assignable (available) as a resource for transmitting a dynamic scheduling transmission acknowledgement signal (Dynamic Scheduling A/N transmission resource, hereinafter, referred to as "DS A/N transmission resource"), a resource for transmitting a semi-persistent scheduling transmission acknowledgement signal (Semi-Persistent Scheduling A/N transmission resource, hereinafter, referred to as "SPS A/N transmission resource"), and an SR transmission resource.

Here, a semi-persistent scheduling (hereinafter, referred to as "SPS") denotes scheduling configured to periodically assign a fixed resource (e.g., a PDSCH resources and a PDUCH resource) to the mobile station UE, and dynamic scheduling (hereinafter, referred to as "DS") denotes scheduling configured to assign a resource (e.g., a PDSCH resource and a PDUCH resource) to the mobile station UE in each sub-frame.

Further, the SPS A/N transmission resource is used to transmit A/N for downlink data scheduled by the SPS and transmitted via PDSCH, and the DS A/N transmission resource is used to transmit A/N for downlink data scheduled by the DS and transmitted via PDSCH.

Specifically, as illustrated in Fig. 10, the resource assignment unit 11 may be configured to use remaining CS/OCs other than CS/OCs, which is available as the DS A/N transmission resource among CS/OCs available in RBs assigned as the SR transmission resource and where the CQI, the A/N, and the SR are present together, as CS/OC available as the SPS A/N transmission resource or the SR transmission resource.

In this case, the number of CS/OCs necessary for the DS A/N transmission resource is fixedly determined by a system bandwidth. For example, when the system bandwidth is "5 MHz", the number of CS/OCs necessary for the DS A/N transmission resource is "20".

Further, as illustrated in Fig. 10, when the CS/OC is arranged in the order of resource indexes, the resource assignment unit 11 may be configured to set CS/OC as CS/OC available as the DS A/N transmission resource, from a head front resource index, and to alternately set remaining CS/OCs available as the SPS A/N transmission resource or the SR transmission resource.

It is noted that, since the transmission frequency of SR is low, the CS/OC available as the SR transmission resource is inserted among the CS/OCs available as the SPS A/N transmission resource, so that it is possible to reduce interference.

As described above, the resource assignment unit 11 is configured to determine the sub-frame and the RB to be assigned as the SR transmission resource, and then determine the CS/OC to be assigned as the SR transmission resource.

For example, the resource assignment unit 11 may be configured to determine the RB to be assigned as the SR transmission resource based on the usage situation of the CS/OC in each RB.

Specifically, the resource assignment unit 11 may be configured to preferentially assign RB having a smaller number of CS/OCs in use, as the SR transmission resource, within each sub-frame.

Further, the resource assignment unit 11 may be configured to preferentially assign RB having a larger number of available CS/OCs, as the SR transmission resource, within each sub-frame.

Here, the resource assignment unit 11 may be configured to use CS/OC that has elapsed a constant period of time after being released within each sub-frame as the available CS/OC.

Also, the resource assignment unit 11 may be configured to preferentially assign RB. having a smaller usage rate of CS/OC within each sub-frame as the SR transmission resource.

For example, the resource assignment unit 11 may be configured to calculate the usage rate of the CS/OC in each RB by (the usage rate of CS/OC) = (the amount of resources used in each RB) = (the number of CS/OCs assignable as SR transmission resource and SPS A/N transmission resource in each RBs).

Here, the amount of the resources used in each RB may be calculated by (the amount of the resources used in each RB) = $W_{SR}$ x (the number of CS/OCs used as SR transmission resource in each RB) + $W_{SPSA/N}$ x(the number of CS/OC s used as SPS A/N transmission resource).

It is noted that, the $W_{SR}$ and the $W_{SPSA/N}$ denote a weight coefficient determined in consideration of the transmission frequency of the SR and the SPS A/N.

That is, in such a case, the resource assignment unit 11 is configured to determine RB to be assigned as the SR transmission resource based on the usage situation of CS/OC used as the SPS A/N transmission resource and the usage situation of CS/OC used as the SR transmission resource in each RB.

As a result, it is possible to suppress interference in the same RBs as much as possible.

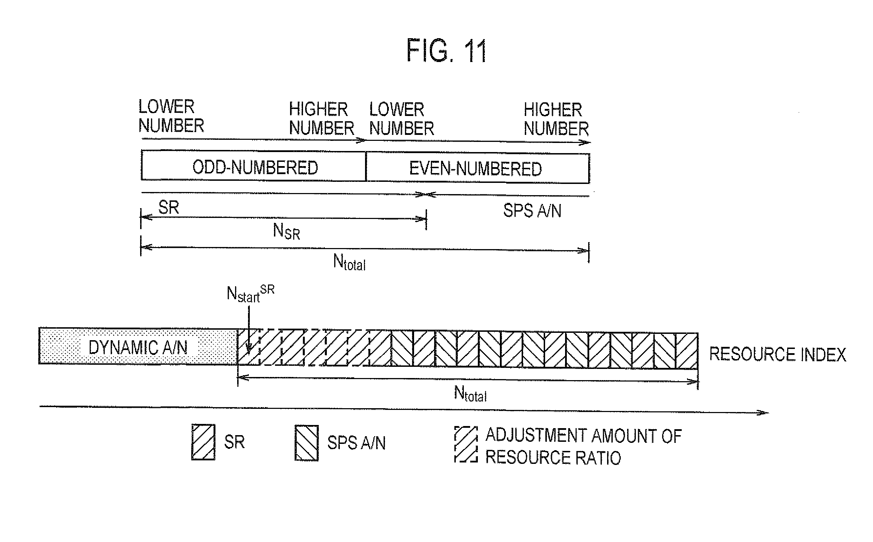

As illustrated in Fig. 11, the resource assignment unit 11 may be configured to assign CS/OC to which an odd resource index is imparted as the SR transmission resource, in order from CS/OC to which the smallest resource index is imparted, from among remaining CS/OCs other than CS/OCs available [0] as the DS A/N transmission resource from among CS/OCs available within RBs where the CQI, the A/N, and the SR are present together.

In such a case, the resource assignment unit 11 may be configured to assign CS/OC to which an even resource index is imparted as the SPS A/N transmission resource, in order from CS/OC to which the largest resource index is imparted, from among remaining CS/OCs other than the CS/OCs available as the DS A/N transmission resource from among the CS/OCs available within the RBs where the CQI, the A/N, and the SR are present together.

Here, as illustrated in Fig. 11, when the number of the CS/OCs used as the SR transmission resource is larger than the number of the CS/OCs used as the SPS A/N transmission resource, the resource assignment unit 11 may be configured to assign the CS/OC to which the even resource index is imparted as the SR transmission resource, in order from the CS/OC to which the smallest resource index is imparted.

As a result, it is possible to adjust a "resource ratio" indicating the ratio of the number of the CS/OCs used as the SPS A/N transmission resource, relative to the number of the CS/OCs used as the SR transmission resource.

In the example of Fig. 11, the resource index for specifying the CS/OC to be assigned as the SR transmission resource is as follows:

$$N_{start}{}^{SR}+2i(i=0,1,\ldots,\mathrm{ceil}(N_{total}/2)\text{-}1)$$

$$N_{start}{}^{SR}+2j+1(j=0,1,\ldots,N_{SR}\text{--}\mathrm{ceil}(N_{total}/2)\text{-}1)$$

Further, in the example of Fig. 11, the resource index for specifying the CS/OC to be assigned as the SPS A/N transmission resource is as follows:

$$N_{start}{}^{SR}+2j+1(j=N_{SR}\text{--}\mathrm{ceil}(N_{total}/2),\ldots,\mathrm{floor}(N_{total}/2)\text{-}1)$$

Here, the $N_{start}{}^{SR}$ denotes the smallest resource index of the CS/OC available as the SR transmission resource, the $N_{SR}$ denotes the number of the CS/OCs available as the SR transmission resource, and the $N_{total}$ denotes the number or remaining CS/OCs other than the CS/OCs available as the DS A/N transmission resource among the CS/OCs available in RBs where the CQI, the A/N, and the SR are present together.

It is noted that, the resource assignment unit 11 may be configured to assign CS/OC to which an even resource index is imparted as the SR transmission resource, in order from CS/OC to which the smallest resource index is imparted, from among remaining CS/OCs other than the CS/OCs available as the DS A/N transmission resource from among the CS/OCs available in the RBs where the CQI, the A/N, and the SR are present together.

In such a case, the resource assignment unit 11 may be configured to assign CS/OC to which an odd resource index is imparted as the SPS A/N transmission resource, in order from CS/OC to which the largest resource index is imparted, from among remaining CS/OCs other than CS/OCs available as the DS A/N transmission resource from among CS/OCs available in RBs where the CQI, the A/N, and the SR are present together.

Further, the resource assignment unit 11 may be configured to assign CS/OC to which an even resource index is imparted as the SR transmission resource, in order from CS/OC to which the largest resource index is imparted, from among remaining CS/OCs other than the CS/OCs available as the DS A/N transmission resource from among the CS/OCs available in the RBs where the CQI, the A/N, and the SR are present together.

In such a case, the resource assignment unit 11 may be configured to assign CS/OC to which an odd resource index is imparted as the SPS A/N transmission resource, in order from CS/OC to which the smallest resource index is imparted, from among remaining CS/OCs other than CS/OCs available as the DS A/N transmission resource from among CS/OCs available in RBs where the CQI, the A/N, and the SR are present together.

Moreover, the resource assignment unit 11 may be configured to assign CS/OC to which an odd resource index is imparted as the SR transmission resource, in order from CS/OC to which the largest resource index is imparted, from among remaining CS/OCs other than the CS/OCs available as the DS A/N transmission resource from among the CS/OCs available in the RBs where the CQI, the A/N, and the SR are present together.

In such a case, the resource assignment unit 11 may be configured to assign CS/OC to which an even resource index is imparted as the SPS A/N transmission resource, in order from CS/OC to which the smallest resource index is imparted, from among remaining CS/OCs other than CS/OCs available as the DS A/N transmission resource from among CS/OCs available in RBs where the CQI, the A/N, and the SR are present together.

Further, the SR transmission resource in each RB is assigned to the mobile station UE in order from the CS/OC to which the smallest resource index is imparted, by an odd-numbered CS/OC, and then is assigned to the mobile station UE in order from the CS/OC to which the smallest resource index is imparted, by an even-numbered CS/OC.

Further, at the time of the assignment, the CS/OC assigned as the SR transmission resource may be assigned in a round-robin manner.

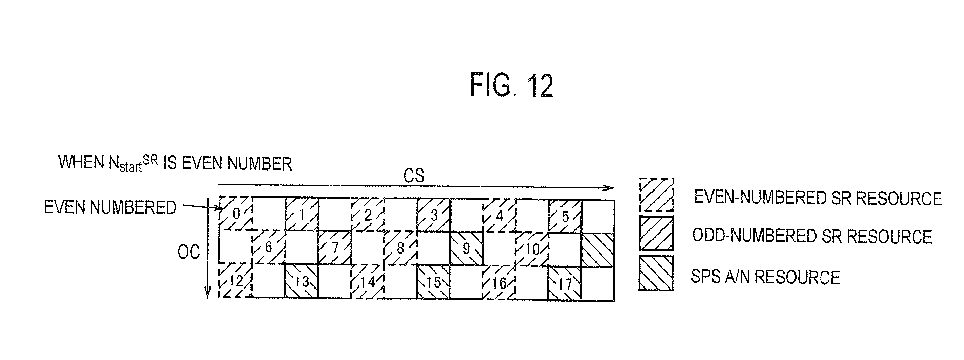

Fig. 12 illustrates an example of the assignment order of CS/OC used as the SR transmission resource when the $N_{start}{}^{SR}$ is an even number and the number of the CS/OCs used as the SR transmission resource is larger than the number of the CS/OCs used as the SPS A/N transmission resource.

(Operation of mobile communication system according to first embodiment of the present invention)

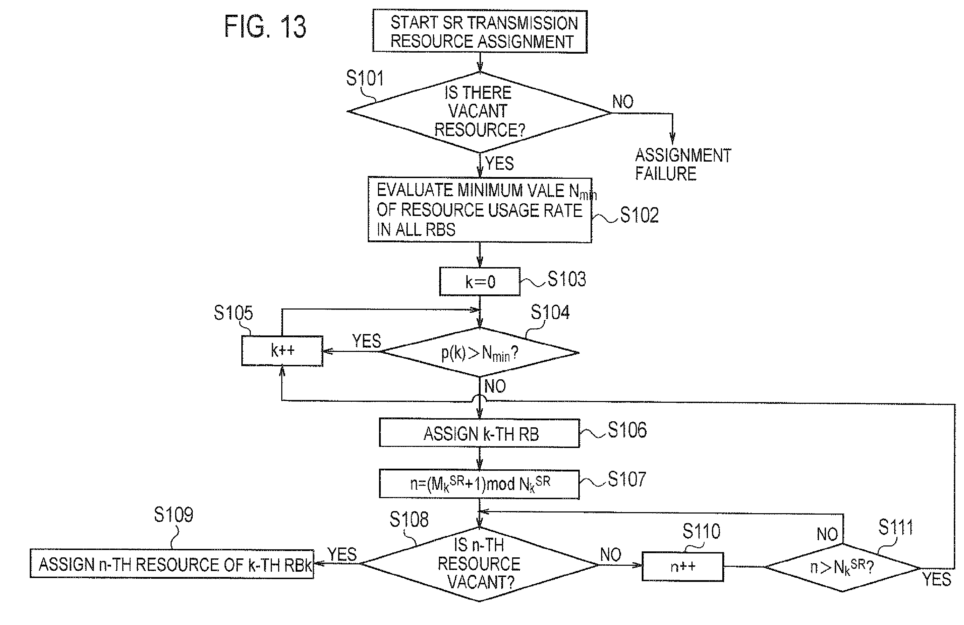

With reference to Fig. 13, the operation of the mobile communication system according to this embodiment, specifically, an operation in which the radio base station eNB assigns SR transmission resource according to this embodiment will be explained.

As illustrated in Fig. 13, in step S101, the radio base station eNB determines whether vacant resources assignable as SR transmission resource exist within a PUCCH resource.

When it is determined that a vacant resource exists, the radio base station eNB proceeds to the process of step S102. When it is determined that the vacant resource does not exist, the radio base station eNB fails in the assignment of the SR transmission resource.

In step S102, the radio base station eNB evaluates a minimum value $N_{min}$ of the resource usage rate (the usage rate of CS/OC) in RBs including the vacant resource assignable as the SR transmission resource.

The radio base station eNB sets "k=0" in step S103 and determines whether "$p(k)>N_{min}$" is established in step S104. Here, the p(k) denotes the resource usage rate in RB#k ($k^{th}$ RB).

When it is determined that the "$p(k)>N_{mim}$" is established, the radio base station eNB increments "k" by one in step S105 until it exceeds the total number of RBs in a subframe, and returns to the operation of step S104.

Meanwhile, when it is determined that the "$p(k)>N_{mim}$" is not established, the radio base station eNB assigns the RB#k as the SR transmission resource in step S106, and calculates "n" by "$n=(M_k^{SR}+1)$ mod $N_k^{SR}$" in step S107.

Here, the $M_k^{SR}$ denotes the number of SR transmission resources used in the $k^{th}$ RB, and the $N_k^{SR}$, denotes the number of all SR transmission resources available in the $k^{th}$ RB.

In step S108, the radio base station eNB determines whether an n-th resource (CS/OC) in the RB#k is available.

When it is determined that the n-th resource (CS/OC) in the RB#k is available, the radio base station eNB assigns the n-th resource (CS/OC) in the RB#k as the SR transmission resource in step S109.

Meanwhile, when it is determined that the n-th resource (CS/OC) in the RB#k is not available, the radio base station eNB increments "n" by one in step S110 and determines whether "$n>N_k^{SR}$" is established in step S111.

When it is determined that the "$n>N_k^{SR}$" is established, the radio base station eNB returns to the operation of step S105. When it is determined that the "$n>N_k^{SR}$" is not established, the radio base station eNB returns to the operation of step S108.

(Operation and Effect of the mobile communication system according to the first embodiment of the present invention)

In accordance with the mobile communication system according to the first embodiment of the present invention, since the radio base station eNB is configured to determine sub-frame and RBs to be assigned as SR transmission resource, and then determine CS/OC to be assigned as the SR transmission resource, the number or CS/OCs assigned as the SR transmission resource in the same RBs is reduced, so that it is possible to suppress the influence of interference.

The above-mentioned characteristics of the embodiment may be expressed as follows:

A first characteristic of this embodiment is a radio base station eNB including: a resource assignment unit 11 configured to determine a sub-frame (time direction resource), RB (frequency direction resource), and CS/OC (code direction resource) which are to be assigned as SR transmission resource (scheduling request transmission resources) for transmitting SR (scheduling request) that requests scheduling for uplink data communication to each mobile station UE, that is, to determine a resource index for specifying the resource (combination of frequency direction resource and code direction resource) in each sub-frame which is to be assigned as the SR transmission resource, in which the resource assignment unit 11 is configured to determine a sub-frame and RB to be assigned as the SR transmission resource, and then to determine CS/OC to be assigned as the SR transmission resource.

In the first characteristic of this embodiment, the resource assignment unit 11 may be configured to determine the RB to be assigned as the SR transmission resource based on the usage situation of CS/OC in each RB.

In the first characteristic of this embodiment, the resource assignment unit 11 may be configured to assign, as the SR transmission resource, in order from RB having a smaller number of CS/OCs in use, within each sub-frame.

In the first characteristic of this embodiment, the resource assignment unit 11 may be configured to assign, as the SR transmission resource, in order from RB having a larger number of available CS/OCs within each sub-frame.

In the first characteristic of this embodiment, the resource assignment unit 1 may be configured to assign, as the SR transmission resource, in order from RB having a smaller usage rate of CS/OC within each sub-frame.

In the first characteristic of this embodiment, the resource assignment unit 11 may be configured to use CS/OC that has elapsed a constant period of time after being released within each sub-frame, as available CS/OC.

In the first characteristic of this embodiment, an SPS A/N transmission resource (resource for transmitting a semi-persistent scheduling transmission acknowledgement signal) is used to transmit A/N (transmission acknowledgement signal) for downlink data scheduled by SPS (semi-persistent scheduling) and transmitted via PDSCH (downlink data channel), a DS A/N transmission resource (resource for transmitting a dynamic scheduling transmission acknowledgement signal) is used to transmit A/N for downlink data scheduled by DS (dynamic scheduling) and transmitted via PDSCH, and the resource assignment unit 11 may be configured to use remaining CS/OCs other than CS/OCs available as the DS A/N transmission resource, among CS/OCs available in RBs assigned as the SR transmission resource, as CS/OC available as the SPS A/N transmission resource or the SR transmission resource.

In the first characteristic of this embodiment, the resource assignment unit 11 may be configured to determine RB to be assigned as the SR transmission resource based on the usage situation of CS/OC used as the SPS A/N transmission resource and the usage situation of CS/OC used as the SR transmission resource in each RB.

In the first characteristic of this embodiment, the resource assignment unit 11 may be configured to assign CS/OC to which an even resource index (even number) is imparted as the SR transmission resource, in order from CS/OC to which the smallest resource index (number) is imparted among the remaining CS/OCs other than the CS/OCs available as the DS A/N transmission resource.

In the first characteristic of this embodiment, the resource assignment unit 11 may be configured to assign CS/OC to which an odd resource index (odd number) is imparted as the SR transmission resource, in order from CS/OC to which the smallest resource index (number) is imparted among the remaining CS/OCs other than the CS/OCs available as the DS A/N transmission resource.

In the first characteristic of this embodiment, the resource assignment unit 11 may be configured to assign CS/OC to which an even resource index (even number) is imparted as the SR transmission resource, in order from CS/OC to which the largest resource index (number) is imparted among the remaining CS/OCs other than the CS/OCs available as the DS A/N transmission resource.

In the first characteristic of this embodiment, the resource assignment unit 11 may be configured to assign CS/OC to which an odd resource index (odd number) is imparted as the SR transmission resource, in order from CS/OC to which the largest resource index (number) is imparted among the remaining CS/OCs other than the CS/OCs available as the DS A/N transmission resource.

A second characteristic of this embodiment is a mobile communication method including: a step A of determining a sub-frame, RB, and CS/OC, which are to be assigned to each mobile station UE as an SR transmission resource; and a step B of notifying each mobile station UE of the sub-frame, the RB, and the CS/OC assigned as the SR transmission resource, in which in the step A, the sub-frame and the RB to be assigned as the SR transmission resource are determined, and then the CS/OC to be assigned as the SR transmission resource is determined.

Note that operation of the above described the radio base station eNB and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station eNB or the mobile station UE. Also, the storage medium and the processor may be provided in the radio base station eNB or the mobile station UE as a discrete component.

It is noted that see the following for the details in Fig. 13:

- resource usage rate of k-th RB: $p(k)$
- Total SR transmission resource number in k-th RB: $N_k^{SR}$
- Total SPS A/N transmission resource number in k-th RB: $N_k^{AN}$
- SR transmission resource number used in k-th RB: $M_k^{SR}$
- SPS A/N transmission resource number used in k-th RB: $M_k^{AN} \rightarrow P(k) = (W_{SR}M_k^{SR} + W_{AN}M_k^{AN})/(N_k^{SR} + N_k^{AN})$
- in k-th RB,
  SR transmission resource assigned last time: $m(k)$
- x-th RB used in this case means x-th RB of a serial number assigned to all the RB in all subframes
- x-th resource used in this case means a resource assigned x-th in SR transmission resource in the RB (number in RB, and different from a resource index that is provided as a serial number over RB)

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

**Claims**

1. A radio base station comprising: a resource assignment unit configured to determine a time direction resource, a frequency direction resource, and a code direction resource which are to be assigned as a scheduling request transmission resource for transmitting a scheduling request that requests scheduling for uplink data communication to each mobile station, wherein
the resource assignment unit is configured to determine the time direction resource and the frequency direction resource, which are to be assigned as the scheduling request transmission resource, and then determine the code direction resource to be assigned as the scheduling request transmission resource.

2. The radio base station according to claim 1, wherein the resource assignment unit is configured to determine the frequency direction resource to be assigned as the scheduling request transmission resource based on a usage situation of the code direction resource in each frequency direction resource.

3. The radio base station according to claim 2, wherein the resource assignment unit is configured to assign, as the scheduling request transmission resource, in order from a frequency direction resource having a smaller number of code direction resources in use in each time direction resource.

4. The radio base station according to claim 2, wherein the resource assignment unit is configured to assign, as the scheduling request transmission resource, in order from a frequency direction resource having a larger number of available code direction resources in each time direction resource.

5. The radio base station according to claim 2, wherein the resource assignment unit is configured to assign, as the scheduling request transmission resource, in order from a frequency direction resource having a lower usage rate of the code direction resource in each time direction resource.

6. The radio base station according to claim 3, wherein the resource assignment unit is configured to use a code direction resource that has elapsed a constant period of time after being released in each frequency direction resource, as the available code direction resource.

7. The radio base station according to claim 1, wherein
a resource for transmitting a semi-persistent scheduling transmission acknowledgement signal is a resource for transmitting a transmission acknowledgement signal for downlink data that has been scheduled by semi-persistent scheduling and has been transmitted via a downlink data channel,
a resource for transmitting a dynamic scheduling transmission acknowledgement signal is a resource for transmitting a transmission acknowledgement signal for downlink data that has been scheduled by dynamic scheduling and has been transmitted via a downlink data channel, and
the resource assignment unit is configured to use remaining code direction resources other than code direction resources available as the resource for transmitting a dynamic scheduling transmission acknowledgement signal, among code direction resources available in the frequency direction resource assigned as the scheduling request transmission resource, as the code direction resource available as the resource for transmitting a semi-persistent scheduling transmission acknowledgement signal or the scheduling request transmission resource.

8. The radio base station according to claim 7, wherein
the resource assignment unit is configured to determine the frequency direction resource to be assigned as the scheduling request transmission resource based on a usage situation of the code direction resource used as the resource for transmitting a semi-persistent scheduling transmission acknowledgement signal and a usage situation of the code direction resource used as the scheduling request transmission resource in each frequency direction resource.

9. The radio base station according to claim 7, wherein
the resource assignment unit is configured to assign the code direction resource to which an even number is imparted as the scheduling request transmission resource, in order from a code direction resource to which the smallest number is imparted among the remaining code direction resources.

10. The radio base station according to claim 7, wherein
the resource assignment unit is configured to assign the code direction resource to which an odd number is imparted as the scheduling request transmission resources, in order from a code direction resource to which the smallest number is imparted among the remaining code direction resources.

11. The radio base station according to claim 7, wherein
the resource assignment unit is configured to assign the code direction resource to which an even number is imparted as the scheduling request transmission resource, in order from a code direction resource to which the largest number is imparted among the remaining code direction resources.

12. The radio base station according to claim 7, wherein
the resource assignment unit is configured to assign the code direction resource to which an odd number is imparted as the scheduling request transmission resource, in order from a code direction resource to which the largest number is imparted among the remaining code direction resources.

13. A mobile communication method, comprising:

a step A of determining a time direction resource, a frequency direction resource, and a code direction resource which are to be assigned as a scheduling request transmission resource for transmitting a scheduling request that requests scheduling for uplink data communication to each mobile station; and
a step B of notifying each mobile station of the time direction resource, the frequency direction resource, and the code direction resource which have been assigned as the scheduling request transmission resource, wherein
in the step A, the time direction resource and the frequency direction resource to be assigned as the scheduling request transmission resource are determined, and then the code direction resource to be assigned as the scheduling request transmission resource is determined.

# FIG. 1

RADIO BASE
STATION eNB

PUCCH
(CQI, A/N, SR)

MOBILE
STATION UE

# FIG. 2

RADIO BASE
STATION eNB

NOTIFICATION
UNIT

12

RESOURCE
ASSIGNMENT
UNIT

11

## FIG. 3

10 SUB-FRAMES

TIME

TRANSMISSION CYCLE 20 MS

OFFSET = 3　　　TRANSMISSION CYCLE = 20

TRANSMISSION CYCLE 20 MS

OFFSET = 7　　　TRANSMISSION CYCLE = 20

SRS TRANSMISSION SUB-FRAME

EP 2 413 653 A1

# FIG. 4

SLOT

CODE MULTIPLEX

PUCCH

PUSCH

INTRA-SUBFRAME
FREQUENCY HOPPING

SYSTEM
BANDWIDTH

PUCCH

SUB-FRAME

# FIG. 5

SUB-FRAME

$n_{PRB}=N_{RB UL}-1$

| #1 | #0 |

| #3 | #2 |

SYSTEM
BANDWIDTH

$n_{PRB}=1$

| #2 | #3 |

$n_{PRB}=0$

| #0 | #1 |

END OF SYSTEM BAND IS FIRSTLY USED

FREQUENCY

TIME

# FIG. 6

FROM A LOWER NUMBER,
RB USED FOR CQI,
AND SUBSEQUENT
THERE TO, RB USED FOR A/N AND SR

CQI TRANSMISSION RB
$N_{RB}^{(2)}$ RBs

RB WHERE CQI, A/N,
AND SR ARE PRESENT
TOGETHER

A/N AND SR
TRANSMISSION RB

| #0 |
| --- |
| $\vdots$ CQI |
| $\#N_{RB}^{(2)}-1$ |
| $\#N_{RB}^{(2)}$ |
| $\#N_{RB}^{(2)}+1$ |
| $\#N_{RB}^{(2)}+2$ |
| $\vdots$ A/N<br>SR |

TOTAL NUMBER OF RBS
USED FOR PUCCH

RESOURCE INDEX IS
DETERMINED IN
CONSECUTIVE NUMBER
OVER THE RB IN A/N
AND SR TRANSMISSION
RESOURCE

# FIG. 7

WHEN THERE IS NOT PRECEDING RB

RESOURCE INDEX = 5

CS

| 0 | | 1 | | 2 | | 3 | | 4 | | 5 | |
| | 6 | | 7 | | 8 | | 9 | | 10 | | 11 |
| 12 | | 13 | | 14 | | 15 | | 16 | | 17 | |

OC

WHEN $\triangle_{shift} = 2$

NEXT RB RESOURCE INDEX STARTS FROM 18

# FIG. 8

ARRANGE GUARD TO AVOID INTERFERENCE

CS

$\#N_{RB}^{(2)}$

| 0 | | 1 | | | | | | | |
| | 2 | | 3 | | | | | | |
| 4 | | 5 | | | | | | | |

OC

$N_{CS}^{(1)}$ : NUMBER OF CSS USED BY A/N AND SR IN MIXED RB

$N_{CS}^{(1)} = \{0,1,2,...,7\} \rightarrow$ TO MULTIPLE NUMBER OF $\triangle_{shift}$

WHEN $\triangle_{shift} = 2$, $N_{CS}^{(1)} = \{0,2,4,6\}$

## FIG. 9

## FIG. 10

Legend: SR, SPS A/N

DYNAMIC A/N

RESOURCE INDEX

EP 2 413 653 A1

EP 2 413 653 A1

## FIG. 11

LOWER          HIGHER   LOWER                HIGHER
NUMBER         NUMBER   NUMBER               NUMBER

| ODD-NUMBERED | EVEN-NUMBERED |
|---|---|

SR                                          SPS A/N

$N_{SR}$

$N_{total}$

$N_{start}^{SR}$

| DYNAMIC A/N | |
|---|---|

RESOURCE INDEX

$N_{total}$

SR    SPS A/N    ADJUSTMENT AMOUNT OF
RESOURCE RATIO

FIG. 12

WHEN $N_{start}{}^{SR}$ IS EVEN NUMBER

EVEN NUMBERED

CS

OC

| 0 | 1 | 2 | 3 | 4 | 5 |
| 6 | 7 | 8 | 9 | 10 | |
| 12 | 13 | 14 | 15 | 16 | 17 |

EVEN-NUMBERED SR RESOURCE

ODD-NUMBERED SR RESOURCE

SPS A/N RESOURCE

EP 2 413 653 A1

FIG. 13

START SR TRANSMISSION RESOURCE ASSIGNMENT

S101 IS THERE VACANT RESOURCE?

NO → ASSIGNMENT FAILURE

YES

S102 EVALUATE MINIMUM VALE $N_{min}$ OF RESOURCE USAGE RATE IN ALL RBS

S103 $k=0$

S104 $p(k) > N_{min}$?

YES → S105 $k++$

NO

S106 ASSIGN k-TH RB

S107 $n = (M_k^{SR} + 1) \bmod N_k^{SR}$

S108 IS n-TH RESOURCE VACANT?

YES → S109 ASSIGN n-TH RESOURCE OF k-TH RBK

NO → S110 $n++$

S111 $n > N_k^{SR}$?

NO

YES

| INTERNATIONAL SEARCH REPORT | International application No. |
|---|---|
| | PCT/JP2010/055019 |

**A. CLASSIFICATION OF SUBJECT MATTER**
*H04W72/04*(2009.01)i, *H04J1/00*(2006.01)i, *H04J3/00*(2006.01)i, *H04W72/12*
(2009.01)i

According to International Patent Classification (IPC) or to both national classification and IPC

**B. FIELDS SEARCHED**

Minimum documentation searched (classification system followed by classification symbols)
H04W4/00-99/00, H04J1/00, H04J3/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2009/022704 A1 (NTT Docomo Inc.),<br>19 February 2009 (19.02.2009),<br>paragraphs [0015] to [0027]; fig. 2 to 5<br>& JP 2009-49539 A        & EP 2180733 A1<br>& KR 20100044861 A      & AU 2008287801 A | 1,2,7,13<br>3-6,8-12 |
| A | WO 2007/148583 A1 (NTT Docomo Inc.),<br>27 December 2007 (27.12.2007),<br>paragraphs [0076] to [0079]<br>& JP 2008-28973 A        & KR 10-2009-0021290 A<br>& EP 2031888 A1          & CN 101502158 A<br>& US 2009/0196249 A1 | 1-13 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 June, 2010 (21.06.10) | Date of mailing of the international search report<br>29 June, 2010 (29.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/055019 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2009/022464 A1  (Panasonic Corp.),<br>19 February 2009 (19.02.2009),<br>entire text; all drawings<br>& EP 2187548 A1          & KR 20100042639 A<br>& CA 2695149 A | 1-13 |

Form PCT/ISA/210 (continuation of second sheet) (July 2009)